# EUROPEAN PATENT APPLICATION

(11) **EP 4 773 383 A1**
(43) Date of publication of application: **08.07.2026**
(21) Application number: 25869621.0
(22) Date of filing: 23.10.2025
(51) Int. Cl.: H01M 50/30, H01M 50/342, H01M 50/375, H01M 50/152, H01M 50/249

(54) **BATTERY CELL, AND BATTERY PACK AND VEHICLE INCLUDING SAME**

(30) Priority: 24.10.2024 KR 20240146252
(71) Applicant: LG ENERGY SOLUTION, LTD., Seoul 07335 (KR)
(72) Inventor: SONG, Hyeon Min, Yuseong-gu, Daejeon 34122 (KR)
(74) Representative: Goddar, Heinz J.
(86) International application number: PCT/KR2025/016877
(87) International publication number: WO 2026/089494

(57) **Abstract**

A battery cell according to the present invention includes: a cell case accommodating an electrode assembly therein; and a safety vent provided in a venting path of the cell case and including a first vent part configured to be deformed when a pressure inside the cell case reaches a venting pressure, and a second vent part having a lower melting point than the first vent part.

## Description

### [TECHNICAL FIELD]

The present invention relates to a battery cell, a battery pack, and a vehicle, and more particularly, to a battery cell capable of venting even before reaching a venting pressure in a high-temperature environment, and a battery pack and a vehicle including the same.

### [BACKGROUND ART]

Secondary batteries, unlike primary batteries that cannot be recharged, refer to batteries capable of charging and discharging, and are applied to portable devices as well as electric vehicles (EV), hybrid electric vehicles (HEV), and the like, which are driven by an electric driving source.

Secondary batteries currently widely used include lithium ion batteries, lithium polymer batteries, nickel cadmium batteries, nickel metal hydride batteries, nickel zinc batteries, and the like. An operating voltage of such a unit secondary battery cell, that is, a unit battery cell, is approximately 2.5 V to 4.6 V. When a higher output voltage is required, a battery pack may be configured by connecting a plurality of battery cells in series. In addition, a battery pack may be configured by connecting a plurality of battery cells in parallel according to a required charge and discharge capacity.

When a battery pack is configured by connecting a plurality of battery cells in series or in parallel, it is common to first configure a battery module including at least one battery cell, and then configure the battery pack by using at least one battery module and adding other components.

Battery cells constituting a battery module are classified into a pouch type, a cylindrical type, a prismatic type, and the like, according to a shape of a cell case.

Among these, cylindrical cells primarily utilize a metal case made into a cylindrical structure, thereby providing excellent safety. Furthermore, they have advantages such as high energy density by accommodating a jelly-roll type electrode assembly inside the case and ease of configuring a large-capacity power storage device by connecting multiple cells in series or in parallel.

An electrode assembly provided in a cylindrical cell is a power generating element capable of charging and discharging, which consists of a stacked structure of a positive electrode, a separator, and a negative electrode, and may be classified into a jelly-roll type, a stack type, and a stack/folding type. The jelly-roll type is a form in which a separator is interposed between a long sheet-type positive electrode and negative electrode coated with an active material and then wound. The stack type is a form in which a plurality of positive electrodes and negative electrodes of a predetermined size are sequentially stacked with a separator interposed therebetween. The stack/folding type is a composite structure of the jelly-roll type and the stack type. Among them, the jelly-roll type electrode assembly has advantages of easy manufacturing and high energy density per weight.

A cap assembly is provided on an upper portion of the cylindrical cell, and a safety vent for discharging gas from inside the cell when a pressure inside the cell rises above a certain pressure is provided in the cap assembly. The safety vent allows gas discharge by rupturing or by a joined portion being short-circuited when the pressure inside the cell rises high enough to exceed a reference pressure.

In a conventional cylindrical cell, the safety vent does not operate if the internal pressure does not rise above a reference pressure. For example, even if fire is directly applied to the outside or the cell is exposed to a very high temperature environment, the safety vent does not operate until the internal pressure rises to the reference pressure.

Generally, in a cylindrical cell, as the internal pressure increases in a high temperature environment, the risk of fire and explosion significantly increases. Therefore, in a high temperature environment, the cylindrical cell needs to relieve pressure by discharging gas in advance before the pressure inside the cell reaches a venting pressure. However, because the conventional cylindrical cell has a structure in which a vent operates only when the pressure inside the cell rises above a certain pressure, it is difficult to relieve pressure before the internal pressure rises above a certain pressure even in a high temperature environment.

### [SUMMARY OF THE INVENTION]

### [TECHNICAL PROBLEM]

The present invention has been devised to solve the problems of the prior art as described above, and an object thereof is to provide a battery cell capable of reducing a risk of fire and explosion by preventing an increase in internal pressure when exposed to a high temperature environment, and a battery pack and a vehicle including the same.

### [TECHNICAL SOLUTION]

A battery cell according to a preferred embodiment of the present invention includes: a cell case accommodating an electrode assembly therein; and a safety vent provided in a venting path of the cell case and including a first vent part configured to be deformed when a pressure inside the cell case reaches a venting pressure, and a second vent part having a lower melting point than the first vent part.

Materials of the first and second vent parts are metallic materials.

The first and second vent parts are connected to each other in a single plane.

An area of the first vent part is larger than an area of the second vent part.

A hole is formed in the first vent part, the second vent part is provided in the hole, and the second vent part is joined to the first vent part within the hole.

The second vent part is formed by inserting a material into the hole in a press-fitting manner.

The second vent part is formed in the hole by a heating or welding method.

The hole has a shape in which an inner diameter thereof decreases from an insertion end of the material toward an opposite end.

The second vent part is formed by inserting a material into the hole and then joining the material by heating or welding.

The battery cell according to the present invention further includes a cap disposed at an open end of the cell case.

The safety vent is disposed between the electrode assembly and the cap within the cell case, and a discharge hole for discharging gas vented through the safety vent to the outside is formed in the cap.

### [ADVANTAGEOUS EFFECTS OF THE INVENTION]

According to the battery cell, and the battery pack and the vehicle including the same of the present invention, in a case of a non-high temperature environment, venting of gas occurs when the pressure inside the cell rises to a venting pressure. In a high temperature environment, an increase in pressure inside the cell is prevented through gas venting in advance before the pressure inside the cell reaches the venting pressure, thereby reducing the risk of fire and explosion.

### [BRIEF DESCRIPTION OF DRAWINGS]

FIG. 1 is a view showing a vehicle equipped with a battery pack.
FIG. 2 is a view showing a state in which a plurality of battery cells are embedded in a battery pack.
FIG. 3 is a perspective view of a battery cell according to an embodiment of the present invention.
FIG. 4 is a longitudinal cross-sectional view of a battery cell according to an embodiment of the present invention.
FIG. 5 is a plan view of a safety vent.
FIG. 6 is a view showing an example of a process of forming a second vent part shown in FIG. 5.
FIG. 7 is a view showing another example of a process of forming the second vent part shown in FIG. 5.
FIG. 8 is a view showing still another example of a process of forming the second vent part shown in FIG. 5.
FIG. 9 is a view showing a state in which venting is performed by melting of the second vent part.
FIG. 10 is a view showing a state in which venting is performed by rupture of the first vent part.

### [MODES FOR CARRYING OUT THE INVENTION]

Hereinafter, a battery cell according to a preferred embodiment of the present invention, and a battery pack and a vehicle including the same will be described in detail with reference to the accompanying drawings.

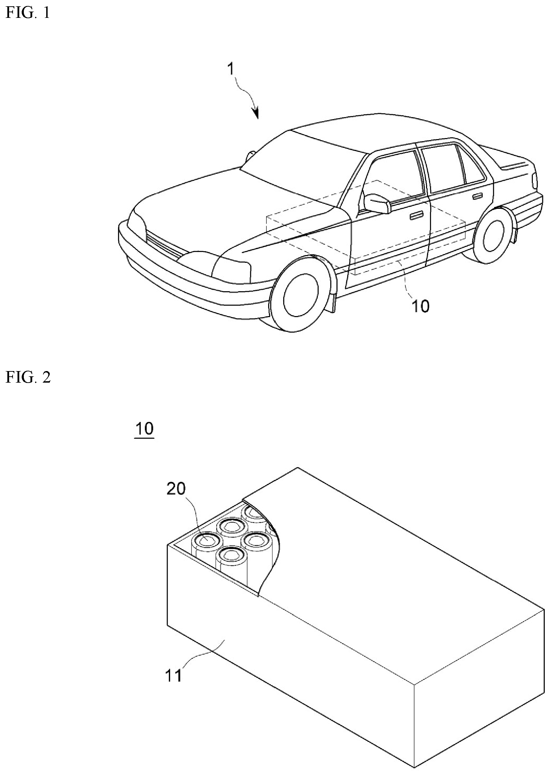

FIG. 1 is a view showing a vehicle equipped with a battery pack.

A vehicle 1 such as an electric vehicle or a hybrid vehicle may include one or a plurality of battery packs 10. The battery pack 10 may supply electric energy required for various operations of the vehicle 1. In addition, the vehicle 1 may further include various other components in addition to the battery pack 10. For example, the vehicle 1 may further include a vehicle body, a motor, a control device such as an electronic control unit (ECU), and the like.

FIG. 2 is a view showing a state in which a plurality of battery cells are embedded in a battery pack.

A battery pack 10 according to an embodiment of the present invention may include a pack case 11 and a plurality of battery cells 20. The pack case 11 accommodates a plurality of battery cells 20 and may include a bottom plate, a side plate, and a top plate. The battery cell 20 may be a cylindrical cell, but is not limited thereto, and may be a cell of various known shapes such as a pouch-type cell, a prismatic cell, and the like.

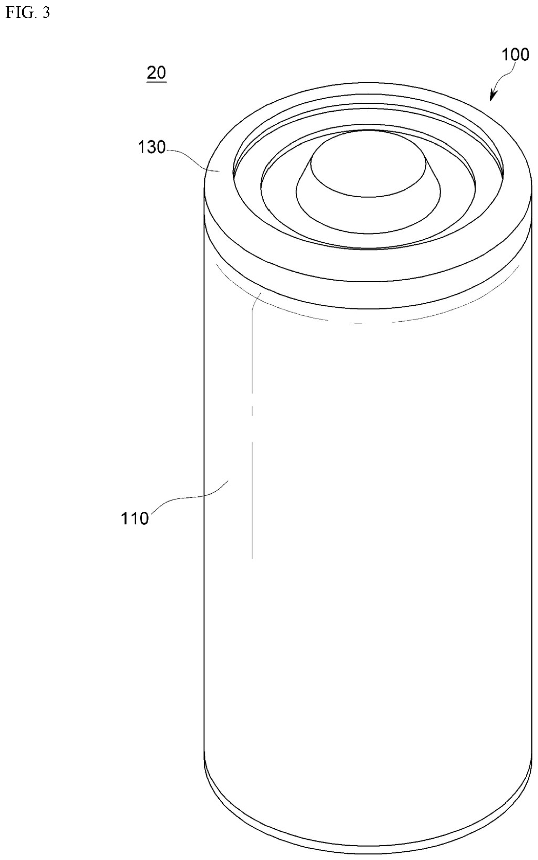

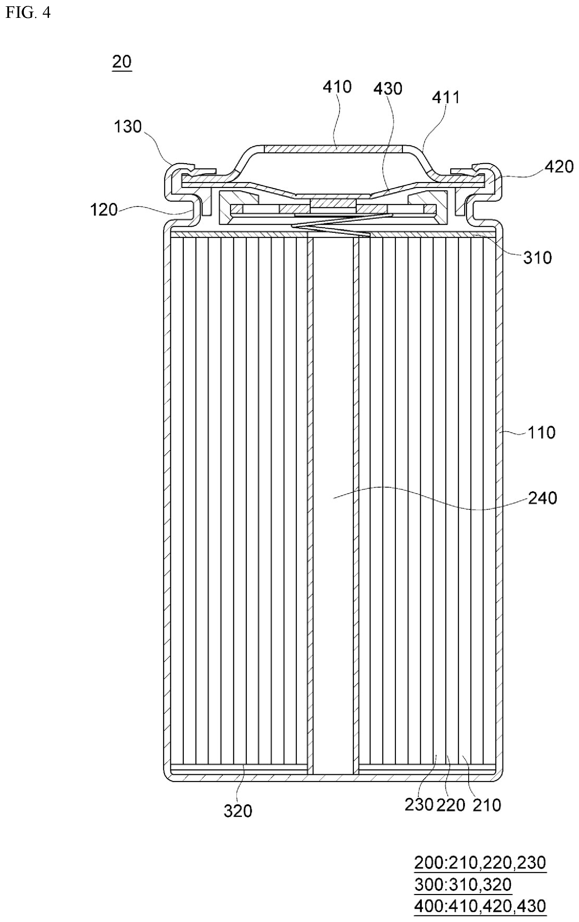

FIG. 3 is a perspective view of a battery cell according to an embodiment of the present invention, and FIG. 4 is a longitudinal cross-sectional view of the battery cell according to an embodiment of the present invention.

A battery cell 20 according to an embodiment of the present invention may be a cylindrical cell and may include a cell case 100, an electrode assembly 200, an insulating member 300, and a cap assembly 400.

The cell case 100 may be in a cylindrical shape that is open at a top thereof and closed at a bottom thereof, and may accommodate the electrode assembly 200 therein. The cell case 100 may include an electrode receiving portion 110, a beading portion 120, and a crimping portion 130. The electrode receiving portion 110, the beading portion 120, and the crimping portion 130 may be integrally formed, or may be formed separately and then joined.

The electrode receiving portion 110 is open at a top thereof and closed at a bottom thereof, and accommodates the electrode assembly 200 therein. The electrode receiving portion 110 occupies the largest volume among the cell case 100, and a side surface thereof may be a cylindrical shape having a constant inner diameter.

The beading portion 120 integrally extends from an upper end of the electrode receiving portion 110 and is configured to stably combine the cap assembly 400 and prevent movement of the electrode assembly 200, and may be formed in a shape concavely recessed toward a center from an upper portion of an outer peripheral surface of the cell case 100. The beading portion 120 may be formed through a beading process after the electrode assembly 200 is accommodated in the electrode receiving portion 110.

The crimping portion 130 extends from an upper end of the beading portion 120, and has an upper end bent inward to surround and fix an edge portion of the cap assembly 400, thereby promoting stable coupling of the cap assembly 400 together with the beading portion 120. The crimping portion 130 may be formed through a crimping process after the cap assembly 400 is seated on the beading portion 120.

The electrode assembly 200 is formed by winding a first electrode 210, a second electrode 220, and a separator 230 interposed therebetween in a jelly-roll shape, and a center pin 240 may be inserted into a center portion thereof.

The insulating member 300 may include an upper insulating member 310 disposed on an upper end of the electrode assembly 200 within the electrode receiving portion 110, and a lower insulating member 320 disposed on a lower end of the electrode assembly 200.

The cap assembly 400 may include a top cap 410, a gasket 420, and a safety vent 430.

The top cap 410 may be disposed at an open top of the cell case 100, and a center portion thereof may be formed to protrude upward. The top cap 410 may be electrically connected to an external device such as a load, a charging device, and the like, and may also be electrically connected to another battery cell 20 through a connection member such as a bus bar. A material of the top cap 410 may be a conductive metallic material such as stainless steel, aluminum, and the like.

A discharge hole 411 may be formed in the top cap 410. A plurality of discharge holes 411 may be disposed to be spaced apart from each other along a circumferential direction of the top cap 410. When gas is generated from the electrode assembly 200, the gas may be discharged to the outside through the discharge hole 411 of the top cap 410.

The gasket 420 is for airtightness between the cap assembly 400 and the cell case 100, and may be disposed within the crimping portion 130 in a state of wrapping edges of the top cap 410 and the safety vent 430.

The gasket 420 has electrical insulation so that the top cap 410 and the safety vent 430 may be insulated from the cell case 100, and may be molded of a material having impact resistance, elasticity, and durability to protect the top cap 410 and the safety vent 430.

The safety vent 430 may be disposed below the top cap 410, and when a pressure inside the cell case 100 is higher than or equal to a predetermined pressure, the safety vent 430 may be ruptured to discharge gas inside the cell case 100 toward the top cap 410, that is, in an upward direction. The gas that has passed through the safety vent 430 may be discharged to the outside through the discharge hole 411 of the top cap 410.

The safety vent 430 may maintain a downwardly convex shape as shown in normal times, and when a pressure in a space below the safety vent 430 within the cell increases due to gas generation in the electrode assembly 200, the safety vent 430 may be deformed to be upwardly convex. When the pressure inside the cell rises above or equal to a predetermined pressure, that is, a venting pressure, the safety vent 430 may be ruptured, and the gas below the safety vent 430 may move toward the top cap 410 through the ruptured portion. The gas moving toward the top cap 410 may be discharged to the outside through the discharge hole 411.

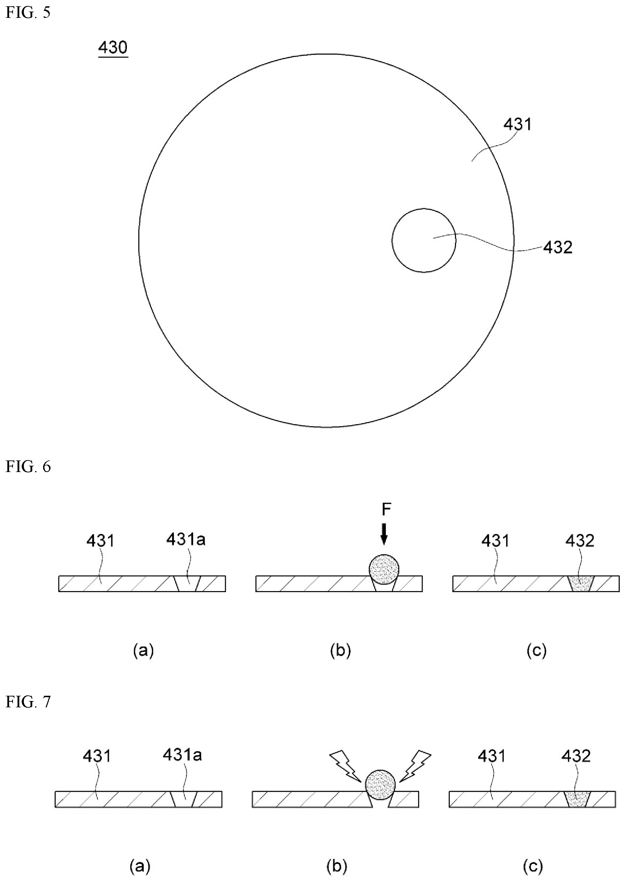

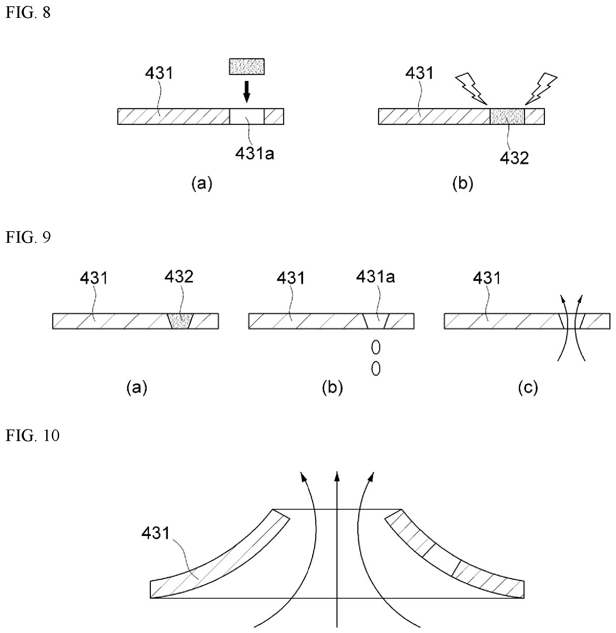

FIG. 5 is a plan view of a safety vent, FIG. 6 is a view showing an example of a process of forming a second vent part shown in FIG. 5, FIG. 7 is a view showing another example of a process of forming the second vent part shown in FIG. 5, and FIG. 8 is a view showing still another example of a process of forming the second vent part shown in FIG. 5.

The safety vent 430 is formed in a circular plate shape and may maintain a downwardly convex shape as shown in FIG. 4 in normal times, and may be deformed to be upwardly convex due to internal pressure increased during gas generation in the electrode assembly 200, that is, internal pressure of the electrode receiving portion 110. When the internal pressure is higher than or equal to the venting pressure, the safety vent 430 is ruptured and may allow gas to pass through the ruptured portion.

FIGS. 6 to 8 schematically illustrate a shape of the safety vent 430.

The safety vent 430 may include a first vent part 431 and a second vent part 432.

The first vent part 431 occupies a large portion of the safety vent 430, is formed in a circular plate shape when viewed from above, and at least one hole 431a is formed in a portion thereof. The first vent part 431 is molded of a metallic material and is deformed to be upwardly convex as pressure inside the cell case 100 rises, and may be ruptured when the pressure is higher than or equal to the venting pressure. The first vent part 431 may be formed to have a larger area than the second vent part 432.

The second vent part 432 is formed within the hole 431a of the first vent part 431, and a press-fitting method by a physical external force and a joining method by heating or laser welding may be used as a forming method thereof. A material of the second vent part 432 may be a metallic material having a lower melting point than that of the first vent part 431.

FIG. 6 illustrates a state in which the second vent part 432 is formed in the hole 431a of the first vent part 431 by a press-fitting method using a physical external force.

A metallic material, which is a material of the second vent part 432, may be pressed from above the first vent part 431 by using a press and the like to be inserted into the hole 431a. In this case, the hole 431a is formed in a shape in which an inner diameter thereof gradually decreases from an upper end, which is an insertion end, toward a lower end, which is an opposite end, so that the metallic material may be easily inserted. The metallic material may be integrated with the first vent part 431 while being inserted into the hole 431a in a press-fitting manner by a pressing force of the press.

FIGS. 7 and 8 illustrate a state in which the second vent part 432 is formed in the hole 431a of the first vent part 431 by a joining method using heating or laser welding. The joining method is not limited to heating or laser welding, and other known joining methods may be applied.

As shown in FIG. 7, the metallic material, which is the material of the second vent part 432, may be melted by heating or laser welding from above the first vent part 431 and inserted into the hole 431a, and then may be integrally joined to the first vent part 431 within the hole 431a. In this case, the hole 431a may be formed in a shape in which an inner diameter thereof decreases from the upper end, which is the insertion end, toward the lower end, which is the opposite end, similar to FIG. 6.

In addition, as shown in FIG. 8, the second vent part 432 may be formed by inserting a metal plate having the same thickness and diameter as the first vent part 431 into the hole 431a and joining the same by a laser welding method. In this case, the hole 431a may be formed to have a substantially uniform inner diameter throughout.

Meanwhile, the second vent part 432 is formed to have the same thickness as the first vent part 431 within the hole 431a, but is not limited thereto and may be formed to be thicker or thinner than the first vent part 431. In addition, the second vent part 432 may be joined to the first vent part 431 in a form of covering the hole 431a from an outside of the hole 431a. That is, an upper end or a lower end of the hole 431a may be covered with the second vent part 432 at an upper surface or a lower surface of the first vent part 431.

FIG. 9 is a view showing a state in which venting is performed by melting of the second vent part.

According to the safety vent 430, since the melting point of the second vent part 432 is lower than that of the first vent part 431, even before the pressure inside the cell case 100 reaches a venting pressure, when a temperature of the second vent part 432 reaches the melting point, the second vent part 432 melts to open the hole 431a of the first vent part 431, and gas inside the electrode receiving portion 110 may be discharged toward the top cap 410 through the opened hole 431a.

When the gas inside the electrode receiving portion 110 is discharged through the hole 431a of the first vent part 431, a gas pressure inside the electrode receiving portion 110 is lowered.

As described above, in a battery cell, a risk of fire and explosion significantly increases as an internal pressure rises in a high temperature environment. Accordingly, in an environment exposed to a high temperature, the battery cell may reduce the risk of fire and explosion by discharging gas to relieve pressure before the internal pressure increases.

Meanwhile, venting performance through the second vent part 432 may be adjusted by varying an area of the second vent part 432 or the number of the second vent parts 432. In addition, when a plurality of second vent parts 432 are provided, the second vent parts 432 may be formed of the same metallic material. However, the present invention is not limited thereto, and the second vent parts 432 may be formed of metal plates having different melting points to vary melting timings of the second vent parts 432 according to temperature changes.

FIG. 10 is a view showing a state in which venting is performed by rupture of the first vent part.

When the battery cell is not exposed to a high temperature, the safety vent 430 becomes upwardly convex as a gas pressure inside the electrode receiving portion 110 rises. When the gas pressure reaches the venting pressure, the first vent part 431 is ruptured and gas inside the electrode receiving portion 110 may be discharged through the ruptured portion. When the first vent part 431 is ruptured, the second vent part 432 may also be ruptured together.

While the battery cell according to the preferred embodiment of the present invention, and the battery pack and the vehicle including the same have been described in detail with reference to the accompanying drawings, the present invention is not limited to the above-described embodiments and may be variously modified within the scope of the following claims.

For example, in the embodiment of the present invention, the second vent part is provided in the hole of the first vent part, but the present invention is not limited thereto, and the first vent part and the second vent part may be separately configured. That is, a separate vent frame may be provided, and the first vent part and the second vent part may be separately configured in the vent frame.

### [REFERENCE NUMERALS]

1: Vehicle, 10: Battery pack
11: Pack case, 20: Battery cell
100: Cell case, 110: Electrode receiving portion
120: Beading portion, 130: Crimping portion
200: Electrode assembly, 210: First electrode
220: Second electrode, 230: Separator
240: Center pin, 300: Insulating member
310: Upper insulating member, 320: Lower insulating member
400: Cap assembly, 410: Top cap
411: Discharge hole, 420: Gasket
430: Safety vent, 431: First vent part
432: Second vent part

## Claims

1. A battery cell, comprising:
a cell case accommodating an electrode assembly therein; and
a safety vent provided in a venting path of the cell case and including a first vent part configured to be deformed when a pressure inside the cell case reaches a venting pressure, and a second vent part having a lower melting point than the first vent part.

2. The battery cell of claim 1, wherein
a material of the first and second vent parts is a metallic material.

3. The battery cell of claim 2, wherein
the first and second vent parts are connected to each other in a single plane.

4. The battery cell of claim 3, wherein
an area of the first vent part is larger than an area of the second vent part.

5. The battery cell of claim 3, wherein
a hole is formed in the first vent part, and the second vent part is provided in the hole.

6. The battery cell of claim 5, wherein
the second vent part is joined to the first vent part within the hole.

7. The battery cell of claim 5, wherein
the second vent part is formed by inserting a material into the hole in a press-fitting manner.

8. The battery cell of claim 5, wherein
the second vent part is formed in the hole by heating or welding.

9. The battery cell of claim 7, wherein
the hole has a shape in which an inner diameter thereof decreases from an insertion end of the material toward an opposite end.

10. The battery cell of claim 8, wherein
the second vent part is formed by inserting a material into the hole and then joining the material by heating or welding.

11. The battery cell of claim 1, further comprising
a top cap disposed at an open end of the cell case.

12. The battery cell of claim 11, wherein
the safety vent is disposed between the electrode assembly and the top cap within the cell case, and a discharge hole for discharging gas vented through the safety vent to the outside is formed in the top cap.

13. A battery pack comprising the battery cell according to any one of claims 1 to 12.

14. A vehicle comprising the battery pack of claim 13.
